# EUROPÄISCHE PATENTSCHRIFT

(11) **EP 2 380 706 B1**
(45) Veröffentlichungstag und Bekanntmachung des Hinweises auf die Patenterteilung: **30.01.2013**
(21) Anmeldenummer: 10004367.8
(22) Anmeldetag: 24.04.2010
(51) Int. Cl.: B25D 1/12, B25G 3/12, B29C 45/14

(54) **Hammer, insbesondere Vorschlaghammer, und Verfahren zur Herstellung eines sochen Hammers**
Hammer, in particular sledge hammer, and method of manufacturing such a hammer
Marteau, notamment marteau vibreur, et procédé de fabrication d'un tel marteau

(43) Veröffentlichungstag der Anmeldung: 26.10.2011
(73) Patentinhaber: Gedore-Werkzeugfabrik GmbH & Co. KG, 42899 Remscheid (DE)
(72) Erfinder: Tasillo, Claudio, 44265 Dortmund (DE)
(74) Vertreter: Stenger, Watzke & Ring

(56) Entgegenhaltungen:
- WO-A1-97/10075
- GB-A- 2 144 069
- SE-B- 462 616
- US-A- 3 792 725
- US-A- 4 334 563
- US-A- 4 344 901
- US-A- 4 683 784
- US-A- 4 738 166
- US-B1- 6 202 511
- US-B1- 7 448 299

## Beschreibung

Die Erfindung betrifft einen Hammer, insbesondere einen Vorschlaghammer, mit einem Hammerkopf und einem Stiel, wobei der Hammerkopf eine Bohrung und der Stiel ein aus Metall gebildetes Rohr aufweist, welches Stielrohr eine Ummantelung aus einem Dämpfungsmaterial trägt, dadurch gekennzeichnet, dass das Stielrohr hammerkopfseitig eine Widerlagerplatte trägt, die mit dem Stielrohr verbunden ist und dass die Bohrung unter Ausbildung eines umlaufenden Absatzes in eine Ausnehmung übergeht, wobei die Widerlagerplatte im endmontierten Zustand unter Zwischenordnung einer Zwischenlage aus einem Dämpfungsmaterial am umlaufenden Absatz anliegt.

Hämmer im Allgemeinen und so auch Vorschlaghammer im Speziellen sind aus dem Stand der Technik an sich bekannt, weshalb es eines gesonderten druckschriftlichen Nachweises an dieser Stelle dem Grunde nicht bedarf.

Hämmer verfügen über einen Hammerkopf einerseits und einen Stiel andererseits, wobei der Hammerkopf einendseitig des Stiels angeordnet ist. Ein gattungsgemäßer Hammer ist aus der WO 97/10075 A1 bekannt gewesen.

Der Stiel besteht in aller Regel aus Holz. Es sind aber auch andere Ausgestaltungsformen bekannt geworden, wie zum Beispiel aus der US 4,683,784 A, der US 4,738,166 A, der US 7,448,299 B1, der US 4,334,563 A und der GB 2,144,069 A..

Bei der aus der US 4,683,784 bekannt gewordenen Konstruktion ist der Hammerstiel aus vier voneinander beabstandet angeordneten Metallstangen gebildet. Um die Torsionssteifigkeit des Stiels zu erhöhen, ist ferner ein gleichfalls aus Metall gebildeter Streifen vorgesehen, der beabstandet zu den Metallstangen zwischen diesen angeordnet ist. Die Metallstangen, der Metallstreifen sowie zur Lagefixierung sowohl der Metallstangen als auch des Metallstreifens vorgesehene Abstandshalter sind in einem elastomeren Gummimaterial eingebettet. Diese auch als Bewehrung zu bezeichnende Konstruktion aus Metallstangen einerseits und einem Metallstreifen andererseits bietet insbesondere gegenüber Konstruktionen ohne Metallstreifen den Vorteil einer verbesserten Torsionsbeständigkeit.

Obgleich sich insbesondere die aus der US 4,683,784 bekannte Konstruktion im alltäglichen Praxiseinsatz bewährt hat, besteht Verbesserungsbedarf, insbesondere mit Blick auf eine verbesserte Handhabung.

Ausgehend vom Vorbeschriebenen ist es deshalb die **Aufgabe** der Erfindung, eine gegenüber dem Stand der Technik verbesserte Hammerkonstruktion vorzuschlagen, die sich insbesondere durch eine vereinfachte Handhabung im bestimmungsgemäßen Verwendungsfall auszeichnet.

Zur **Lösung** dieser Aufgabe wird mit der Erfindung vorgeschlagen, dass das Stielrohr hammerkopfseitig eine Widerlagerplatte trägt, die mit dem Stielrohr verbunden ist und dass die Bohrung unter Ausbildung eines umlaufenden Absatzes in eine Ausnehmung übergeht, wobei die Widerlagerplatte im endmontierten Zustand unter Zwischenordnung einer Zwischenlage aus einem Dämpfungsmaterial am umlaufenden Absatz anliegt.

Der Stiel nach dem erfindungsgemäßen Hammer kann aus einem Stielrohr einerseits und einer dieses Stielrohr umgebenden Ummantelung aus einem Dämpfungsmaterial andererseits gebildet sein. Dabei umgibt das Dämpfungsmaterial das Stielrohr über dessen gesamte Erstreckung sowohl in Umfangsrichtung als auch in Längsrichtung. Das Stielrohr ist damit vollständig vom Dämpfungsmaterial ummantelt.

Im Unterschied zur vorbeschriebenen Konstruktion nach der US 4,683,784 kommt anstelle einer aus Metallstangen, einem Metallstreifen und Abstandshaltern gebildeten Bewehrung ein aus Metall bestehendes Stielrohr zum Einsatz. Dieses ist bevorzugterweise aus einem Vergütungsstahl wie zum Beispiel C45 gebildet.

Der Vorteil der Stielrohr-Konstruktion nach der Erfindung gegenüber der Ausgestaltung nach der US 4,683,784 besteht insbesondere darin, dass Gewicht eingespart ist. Aufgrund der hohlen Ausgestaltung des Stielrohres erweist sich der erfindungsgemäße Stiel bei gleicher Länge als sehr viel leichter als derjenige nach der vorbekannten Konstruktion gemäß der US 4,683,784. Dies vereinfacht im bestimmungsgemäßen Verwendungsfall die Handhabung des Hammers. Darüber hinaus ist aufgrund der gewichtseinsparenden Ausgestaltung des Stiels eine zielgerichtetere Führung des Hammerkopfes möglich. Damit gestattet der erfindungsgemäße Hammer eine verbesserte Zielführung des Hammerkopfes.

Ein weiterer Vorteil der erfindungsgemäßen Ausgestaltung liegt in dem gesteigerten Widerstandsmoment des Stiels, und zwar sowohl mit Bezug auf Biegung als auch hinsichtlich Torsion, wobei das Torsionswiderstandsmoment im Unterschied zur Konstruktion nach der US 4,683,784 richtungsunabhängig gleich groß ist. Auch insofern ist die erfindungsgemäße Ausgestaltung derjenigen nach dem Stand der Technik überlegen.

Ein weiterer Vorteil ergibt sich durch die vergünstigte Herstellung. Zum einen kann Dämpfungsmaterial eingespart werden. Zum anderen ist die Montage erheblich vereinfacht. Eine Reduzierung des eingesetzten Dämpfungsmaterials ergibt sich dadurch, dass es bei der erfindungsgemäßen Ausgestaltung lediglich einer Ummantelung des Stielrohres bedarf. Bei der aus dem Stand der Technik bekannten Konstruktion ist im Unterschied hierzu nicht nur eine Ummantelung vorgesehen, sondern es findet auch ein Ausspritzen der einzelnen Zwischenräume zwischen den Metallstangen bzw. den Metallstangen und dem Metallstreifen statt. Dieses zur Auffüllung der Zwischenräume verwendete Material kann bei der erfindungsgemäßen Ausgestaltung vollends eingespart werden.

Im Übrigen erlaubt die erfindungsgemäße Ausgestaltung eine erhebliche Montagevereinfachung. Die nach dem Stand der Technik vorgesehenen Einzelkomponenten sind zur Ausbildung der Bewehrung miteinander zu verbinden. Die US 4,683,784 schlägt in diesem Zusammenhang alternative Montagemöglichkeiten vor, kann auf diese Montage im Unterschied zur erfindungsgemäßen Ausgestaltung aber nicht verzichten. Auch insofern erweist sich die einstückige Ausgestaltung der nach der Erfindung vorgesehenen Bewehrung in Form eines Rohrs als vorteilhaft.

Insgesamt wird mit der erfindungsgemäßen Ausgestaltung ein Hammer zur Verfügung gestellt, der sich präziser führen lässt. Darüber hinaus ist eine Gewichtsreduzierung erreicht, und dies bei gleichzeitiger Erhöhung des Widerstandsmoments. Insgesamt ergibt sich somit eine vereinfachte und im Ergebnis verbesserte Handhabung. Nicht zuletzt erlaubt die erfindungsgemäße Ausgestaltung auch eine Reduzierung der Herstellungskosten.

Bei dem Dämpfungsmaterial handelt es sich um ein spritzfähiges Material, das über Dämpfungseigenschaften verfügt. Als Dämpfungsmaterial kommt insbesondere ein Kunststoffmaterial, wie zum Beispiel ein Elastomer in Betracht, vorzugsweise auf Polymer-Basis. Ein Gummimaterial ist indes bevorzugt, wobei das Gummimaterial aus Naturkautschuk oder aus synthetischem Kautschuk hergestellt sein kann.

Da die Verwendung eines Gummimaterials als Dämpfungsmaterial bevorzugt ist, wird im Weiteren allein hierauf abgestellt. Es können allerdings auch andere Materialien als Dämpfungsmaterial zum Einsatz kommen.

Das Stielrohr trägt hammerkopfseitig eine Widerlagerplatte. Diese ist mit dem Stielrohr verbunden, wobei die Verbindung vorzugsweise stoffschlüssig ausgebildet ist, was beispielsweise durch Verschweißen erreicht werden kann. Aber auch eine einstückige Ausgestaltung von Stielrohr und Widerlagerplatte ist denkbar.

Im endmontierten Zustand dient die Widerlagerplatte als Rückhaltelager für den Hammerkopf, so dass sich dieser bei einer bestimmungsgemäßen Ausholbewegung nicht ungewollt vom Stielrohr trennt.

Der Hammerkopf weist gemäß einer bevorzugten Ausführung der Erfindung eine Bohrung auf, die über einen zylindrischen Mittelabschnitt verfügt, der beiderseitig jeweils in einen sich ausgehend vom zylindrischen Mittelabschnitt konisch erweiternden Randabschnitt übergeht. Anstelle dieser konisch ausgestalteten Randabschnitte kann ausgehend vom zylindrischen Mittelabschnitt auch eine ellipsenförmige Erweiterung vorgesehen sein. Sinn und Zweck dieser sich in ihrer Geometrie gegenüber dem Mittelabschnitt erweiternden Randabschnitte ist es, jeweilige Spalträume auszugestalten. Diese sind im endmontierten Zustand des Hammers mit einem einen Ringkörper bildenden Gummimaterial ausgefüllt, was aus zweierlei Gründen von Vorteil ist. Zum einen ist eine gedämpfte Lagerung des Hammerkopfes gegenüber dem in die Bohrung eingesetzten Stielrohr erreicht. Im bestimmungsgemäßen Verwendungsfall auftretende Rückstöße und/oder -schwingungen können so abgedämpft und damit abgemildert werden, was einen für den Verwender angenehmeren Gebrauch gestattet. Zum anderen wirkt das in die Spalträume eingebrachte Material nach Art einer Verkeilung, so dass eine zusätzliche Lagesicherung des Hammerkopfes relativ gegenüber dem Stielrohr erreicht ist.

Die Bohrung geht erfindungsgemäß unter Ausbildung eines umlaufenden Absatzes in eine Ausnehmung über. Diese Ausnehmung ist in ihrer geometrischen Abmessung zur Größe der Widerlagerplatte entsprechend ausgebildet und nimmt diese im endmontierten Zustand auf. Im endmontierten Zustand stützt sich die Widerlagerplatte am umlaufenden Absatz der Bohrung ab, so dass der schon vorbeschriebene Rückhalt des Hammerkopfes durch das Stielrohr gewährleistet ist. Dabei liegt die Widerlagerplatte erfindungsgemäß unter Zwischenordnung einer Zwischenlage aus einem Gummimaterial am umlaufenden Absatz an. Eine dämpfende Abstützung des Hammerkopfes gegenüber dem Stielrohr ist so erreicht.

Die Widerlagerplatte verfügt vorzugsweise über einen Durchgang, beispielsweise in Form eines Schlitzes. Bevorzugterweise sind mehrere Durchgänge vorgesehen, vorzugsweise zwei. Diese Durchgänge dienen während der Herstellung dazu, ein widerlagerplattenentfernt in die Bohrung des Hammerkopfes eingespritztes Gummimaterial auf die andere Seite der Widerlagerplatte durchströmen zu lassen, so dass die Widerlagerplatte im endmontierten Zustand eine Platte aus Gummimaterial trägt.

Verzugsweise sind die Ummantelung, der Ringkörper, die Zwischenlage und die Platte einstückig aus ein- und demselben Gummimaterial ausgebildet. Es wird erfindungsgemäß insofern nicht nur eine aus einem Gummimaterial bestehende Ummantelung für das Stielrohr bereitgestellt, sondern darüber hinaus auch eine Entkopplung von Stielrohr und Hammerkopf insofern erreicht, als dass der Hammerkopf unter Zwischenordnung von Gummimaterial am Stielrohr angeordnet ist. In vorteilhafter Weise ergibt sich so ein Gummistiel, der im Unterschied zum Stand der Technik nicht nur eine Gummiummantelung bereitstellt, sondern darüber hinaus auch als Dämpfer wirkt, weil der Hammerkopf nicht in direktem Kontakt mit dem Stielrohr steht. Das Stielrohr und der Hammerkopf stehen vielmehr nur im indirekten Kontakt, und zwar aufgrund der Zwischenordnung des Gummimaterials zwischen Stielrohr einerseits und Hammerkopf andererseits. Es wird so eine dämpfende Lagerung des Hammerkopfes gegenüber dem Stielrohr erreicht, womit das Schwingungsverhalten, insbesondere das Rückprallverhalten zugunsten einer vereinfachten Handhabung verbessert ist. Im bestimmungsgemäßen Verwendungsfall auftretende Schlag- und Schwingungsbeanspruchungen werden abgedämpft und im Unterschied zum Stand der Technik nicht 1:1 über den Stiel an einen Verwender weitergereicht.

Das Schwingungsverhalten, das heißt die Dämpfungseigenschaften können dabei in vorteilhafter Weise eingestellt werden, und zwar durch die entsprechende Wahl des Gummimaterials. Je nach eingesetztem Gummimaterial bestimmt sich die Materialhärte. Es ist eine Schorhärte von 60 bis 80 bevorzugt, mehr bevorzugt von 70. Durch entsprechende Additive kann wahlweise aber auch eine andere Schorhärte ausgewählt bzw. eingestellt werden.

Mit der Erfindung wird ferner ein Verfahren zur Herstellung eines Hammers der erfindungsgemäßen Art vorgeschlagen. Gemäß diesem Verfahren wird ein in die Bohrung eines Hammerkopfes eingesetztes Rohr aus Metall mit einem Gummimaterial vollständig umspritzt, wobei gleichzeitig das Gummimaterial in einen Spaltraum zwischen Rohr und Bohrung zur Ausbildung einer Zwischenlage eingespritzt wird. In einem Verfahrenszyklus wird so die Stielrohrummantelung einerseits als auch der zwischen Hammerkopf und Stielrohr ausgebildete Dämpfer andererseits ausgebildet. Dabei bestehen die Ummantelung und der Dämpfer aus ein und demselben Gummimaterial, gehen insofern einstückig ineinander über. Dies vereinfacht die Herstellung und macht das erfindungsgemäße Verfahren insbesondere kostengünstig.

Während der Verfahrensdurchführung wird, Vorzugsweise das in die Bohrung des Hammerkopfes eingeführte Rohr niedergehalten. Der Verfahrensschritt des Niederhaltens ist deshalb erforderlich, damit das Stielrohr infolge des Spritzdrucks nicht aus der Hammerkopfdurchgangsbohrung in Richtung der Widerlagerplatte hinausgedrückt wird. Es kommt zu diesem Zweck eine Niederhalterplatte zum Einsatz, die gleichzeitig dazu dient, die Hammerkopfdurchgangsbohrung abzudichten. Widerlagerplattenseitig verfügt die Niederhalterplatte über Stifte. Im Zuge der Verfahrensdurchführung stützt sich die Widerlagerplatte gegenüber diesen Stiften an der Niederhalterplatte ab. Dabei kann über die Länge der Stifte eingestellt werden, wie weit sich die Widerlagerplatte im Zuge des einwirkenden Spritzdrucks vom umlaufenden Absatz der Hammerkopfdurchgangsbohrung entfernen kann. Je nach gewählter Stiftlänge stellt sich so ein entsprechend großer Ringraum zwischen Absatz einerseits und Widerlagerplatte andererseits ein, der im Zuge des Gummieinspritzvorgangs mit Gummimaterial gefüllt wird. Insofern wird die Niederhaltung des Stielrohres zur Ausbildung eines Ringspalts gemäß einem weiteren Merkmal der Erfindung eingestellt.

Im Einzelnen geht die Herstellung des erfindungsgemäßen Hammers wie folgt von Statten:

Das Stielrohr wird in einem ersten Arbeitsschritt mit seinem widerlagerplattenentfernten Ende voran durch die Bohrung im Hammerkopf durchgeführt. Nach einem vollständigen Durchführen liegt die Widerlagerplatte des Stielrohres am umlaufenden Absatz zwischen Bohrung und Ausnehmung, in die die Bohrung übergeht, an. Es folgt sodann der Verfahrensschritt des Gummi-Umspritzens. Zu diesem Zweck wird hammerkopfseitig eine Niederhalterplatte auf die die Widerlagerplatte aufnehmende Ausnehmung des Hammerkopfes gesetzt. Das Stielrohr wird in eine entsprechende Form eingelegt, die den Stiel vollständig aufnimmt und die hammerkopfseitig an diesem dichtend anliegt. Alsdann wird das Gummimaterial in die Form eingespritzt. Infolgedessen wird das Stielrohr mit Gummimaterial umhüllt. Das Gummimaterial wird infolge des Ein- bzw. Umspritzens auch in den Spaltraum zwischen Hammerkopfbohrung und Stielrohr eingebracht. Infolgedessen wird die Lagerung des Stielrohres gegenüber dem Hammerkopf unter Zwischenordnung von Gummimaterial ausgebildet.

Während des Spritzvorgangs drückt das in die Spritzform eingebrachte Gummimaterial gegen die Widerlagerplatte des Stilrohres, womit dieses bestrebt ist, aus der Hammerkopfbohrung herausgedrückt zu werden. Um dies zu vermeiden, ist die Niederhalterplatte mit Stiften ausgerüstet, gegen die die Widerlagerplatte im Zuge einer bestimmungsgemäßen Verfahrensdurchführung infolge des Spritzdrucks gedrückt wird. Dabei kann über die Länge der Stifte bestimmt werden, wie weit die Widerlagerplatte beim Spritzvorgang verfahren wird, das heißt sich vom umlaufenden Absatz zwischen Ausnehmung und Bohrung entfernt. Dabei kann sich um so mehr Gummimaterial im Spaltraum zwischen Widerlagerplatte und umlaufenden Absatz einfinden, desto weiter eine Verfahrbewegung der Widerlagerplatte gestattet ist. Auf diese Weise kann der sich ausbildende Ringkörper aus Gummimaterial zwischen Widerlagerplatte und umlaufendem Absatz hinsichtlich seiner Materialstärke eingestellt werden.

Während des Spritzvorgangs liegt die Niederhalterplatte im Übrigen die im Hammerkopf ausgebildete Ausnehmung abdichtend außenseitig am Hammerkopf an, so dass ein bündiger Abschluss zwischen dem Hammerkopf einerseits und dem in die Ausnehmung eingeströmten Gummimaterial andererseits gewährleistet ist.

Stielseitig wird ein am Hammerkopf anliegender umlaufender Bund ausgebildet. Dieser Bund hat zwei Funktionen. Zum einen soll die in Richtung auf das Stielrohr zulaufende konische Öffnung der Bohrung abgedeckt werden. Zum anderen dient der Gummibund als Stabilisierung. Aufgrund des Gummimaterials zwischen Durchgangsbohrung und Stielrohr kann der Hammerkopf federelastisch gegenüber dem Stielrohr bewegt werden. Der Bund dient als diesbezügliche Abstützung des Hammerkopfes gegenüber dem Stielrohr.

Während des Spritzvorganges herrschen Drücke von ca. 160 bar. Dies kann zu einem ungewollten Durchbiegen des Stielrohres innerhalb der Spritzgussform führen, was in der Konsequenz zu einer ungleichmäßigen Schichtdicke des Gummis um das Stielrohr herum führen kann. Um dies zu vermeiden, können innerhalb der Form angeordnete Fixierungsstifte vorgesehen sein, die das Stielrohr in ihrer gewollten Ausrichtung relativ gegenüber der Form halten.

Weitere Merkmale und Vorteile der Erfindung ergeben sich aus der nachfolgenden Beschreibung anhand der Fign. Dabei zeigen
- Fig. 1: in teilgeschnittener Seitenansicht einen Hammer nach der Erfindung;
- Fig. 2: in Seitenansicht ein Stielrohr und
- Fig. 3: in Seitenansicht den erfindungsgemäßen Hammer ohne Hammerkopf.

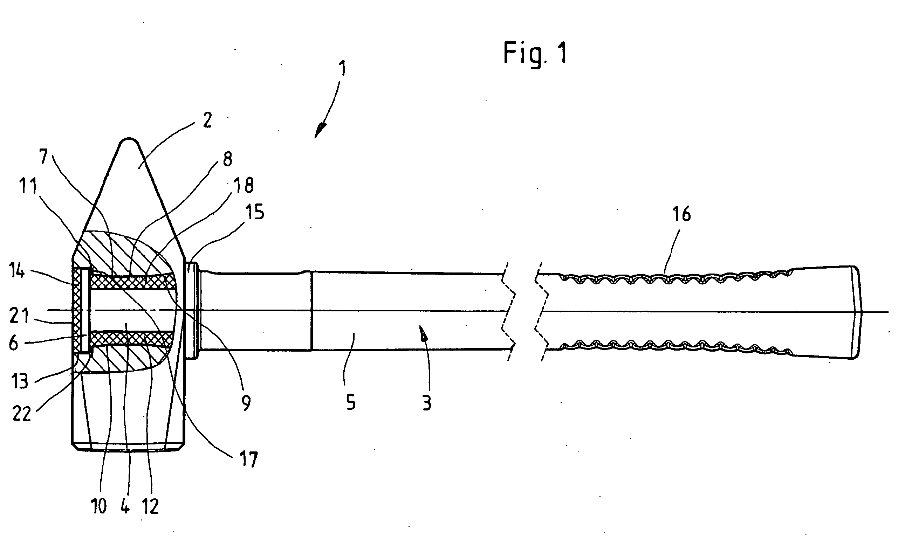

Fig. 1 lässt in teilgeschnittener Seitenansicht den Hammer 1 nach der Erfindung erkennen. Dieser verfügt in an sich bekannter Weise über einen Hammerkopf 2 einerseits und einen Stiel 3 andererseits.

Der Stiel 3 weist als Bewehrung erfindungsgemäß ein Stielrohr 4 auf. Dieses trägt eine Ummantelung 5 aus einem Gummimaterial.

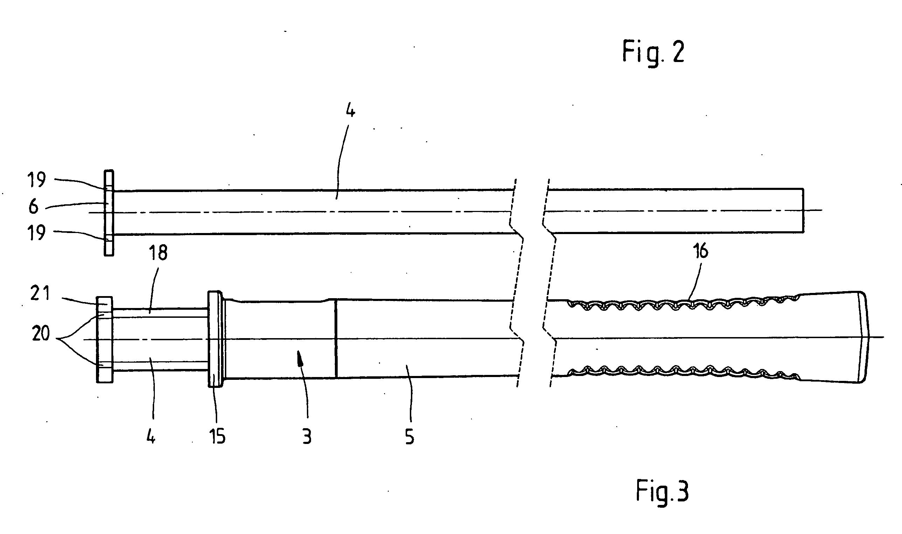

Wie insbesondere Fig. 2 erkennen lässt, trägt das Stielrohr 4 hammerkopfseitig eine Widerlagerplatte 6. Diese ist bevorzugterweise durch Verschweißen stoffschlüssig mit dem Stielrohr 4 verbunden. Gemäß einer bevorzugten, der besseren Übersicht wegen in den Fign. aber nicht gezeigten Ausführungsform der Erfindung besitzt die Widerlagerplatte 6 stielrohrseitig einen Fortsatz. Im endmontierten Zustand ist die Widerlagerplatte 6 mit dem Stielrohr 4 verschweißt, wobei der stielrohrseitige Fortsatz der Widerlagerplatte 6 in den vom Stielrohr 4 bereitgestellten Hohlraum hineinragt. Auf diese Weise ist eine lagesichere Positionierung der Widerlagerplatte 6 gegenüber dem Stielrohr 4 erreicht.

Der Hammerkopf 2 stellt, wie insbesondere Fig. 1 entnommen werden kann, eine Bohrung 7 bereit. Diese Bohrung 7 verfügt über einen im Querschnitt zylinderförmig ausgebildeten Mittelabschnitt 8. Dieser Mittelabschnitt 8 geht beiderseitig jeweils in einen sich ausgehend vom Mittelabschnitt konisch erweiternden Randabschnitt 9 bzw. 10 über.

Die Bohrung 7 weist auf ihrer dem Stiel 3 abgewandten Seite darüber hinaus eine Ausnehmung 13 vorzugsweise in Form einer Ausfräsung auf. Alternativ kann diese Ausnehmung 13 auch durch Schmieden hergestellt sein. Die Ausnehmung 13 ist in ihrer geometrischen Abmessung an die Größe der Widerlagerplatte 6 derart angepasst, dass sie diese im endmontierten Zustand aufnimmt, wie dies aus Fig. 1 zu erkennen ist. Im Übergangsbereich zwischen Ausnehmung 13 und Randabschnitt 10 ist ein umlaufender Absatz 17 ausgebildet, an dem die Widerlagerplatte 6 anliegt. Im bestimmungsgemäßen Verwendungsfall stützt sich der Hammerkopf 2 über diesen umlaufenden Absatz 17 an der Widerlagerplatte 6 ab, so dass ein sicherer Halt des Hammerkopfes 2 am Stiel 3 gewährleistet ist.

Wie die Darstellung insbesondere nach Fig. 1 erkennen lässt, sind zwischen dem Stahlrohr 4 und der Bohrung 7 ein Spaltraum 12, zwischen dem umlaufenden Absatz 17 und der Widerlagerplatte 6 ein Ringspalt 11 und in Längsrichtung des Stiels 3 oberhalb der Widerlagerplatte 6 ein Freiraum 14 vorgesehen. Diese sind im endmontierten Zustand mit einem Gummimaterial ausgefüllt, wobei der Freiraum 14 eine die Widerlagerplatte 6 abdeckende Platte 21, der Spaltraum 12 einen Ringkörper 18 und der Ringspalt 11 eine Zwischenlage 22 aus gummielastischem Material aufnehmen. Dabei sind die Zwischenlage 22, der Ringkörper 18 und die Platte 21 zusammen mit der Ummantelung 5 einstückig aus ein und demselben Gummimaterial ausgebildet. Die Zwischenlage 22 und der Ringkörper 18 bilden zusammen einen Dämpfer, unter dessen Zwischenanordnung der Hammerkopf 2 vom Stielrohr 4 getragen ist.

Der Ausnehmung 13 gegenüberliegend ist ein am Hammerkopf 2 anliegender Bund 15 ausgebildet. Dieser ergibt sich als Verdickung der Ummantelung 5 und dient insbesondere dazu, die Bohrung 7 stielseitig abzudecken, wie sich aus den Fign. 1 und 3 entnehmen lässt.

Zur Ausbildung des erfindungsgemäßen Hammers 1 wird das Stielrohr 4 mit seinem widerlagerplattenentfernten Ende voran durch die Bohrung 7 im Hammerkopf 2 hindurchgeführt. Nach einem vollständigen Durchführen liegt die Widerlagerplatte 6 in der Ausnehmung 13 an dem umlaufenden Absatz 17 an. Das widerlagerplattenentfernte Ende des Stielrohrs 4 wird sodann mit einem Pfropfen verschlossen. Alsdann wird das Stielrohr 4 in eine entsprechende Form eingesetzt und eine Niederhalterplatte wird die Ausnehmung 13 abdichtend an den Hammerkopf 2 angelegt.

In einem nächsten Verfahrensschritt wird Gummimaterial in die Spritzgießform eingebracht. Dies erfolgt durch Einspritzen. Infolgedessen wird das Stielrohr 4 mit Gummimaterial umhüllt. Das Gummimaterial gelangt darüber hinaus in den Spaltraum 12 zwischen Bohrung 7 und Stielrohr 4. Der Spaltraum 12 wird so mit Gummimaterial ausgefüllt. Dabei drückt das in den Spaltraum 12 einströmende Gummimaterial gegen die Widerlagerplatte 6 und hebt diese vom umlaufenden Absatz 17 ab. Hierdurch entsteht der schon vorbeschriebene Ringspalt 11, der unter Ausbildung der Zwischenlage 22 ebenfalls mit Gummimaterial gefüllt wird.

Die Widerlagerplatte 6 verfügt über Durchgänge 19, wie insbesondere die Darstellung nach Fig. 2 erkennen lässt. Diese Durchgänge 19 können beispielsweise in Form von Schlitzen ausgebildet sein. Durch diese Durchgänge 19 strömt das eingespritzte Gummimaterial auf die andere Seite der Widerlagerplatte 6 in den Freiraum 14. Von der Niederhalterplatte abgedichtet wird dieser Freiraum 14 ebenfalls mit Gummimaterial befüllt, was in der Konsequenz zu der im endmontierten Zustand die Widerlagerplatte 6 abdeckenden Platte 21 führt.

Die in den Fign. nicht näher dargestellte Niederhalterplatte verfügt auf ihrer der Widerlagerplatte 6 zugewandten Seite über Abstandshalter in Form von Stiften, über deren Länge bestimmt werden kann, wie weit sich die Widerlagerplatte 6 während des Einspritzvorgangs vom umlaufenden Absatz 17 entfernen kann. Nach einer Entformung des endfertig ausgebildeten Hammers 1 hinterlassen diese Abstandshalter in der Platte 21 Aussparungen 20, wie sie in Fig. 3 angedeutet sind.

Zur weiteren Verbesserung der Handhabung des Hammers 1 kann spritzgussformseitig vorgesehen sein, einen mit einer besonderen Oberflächenrauhigkeit ausgestalteten Griffbereich 16 auszubilden. Diese Ausgestaltung ist rein optional.

### Bezugszeichenliste

- 1: Hammer
- 2: Hammerkopf
- 3: Stiel
- 4: Stielrohr
- 5: Ummantelung
- 6: Widerlagerplatte
- 7: Bohrung
- 8: Mittelabschnitt
- 9: Randabschnitt
- 10: Randabschnitt
- 11: Ringspalt
- 12: Spaltraum
- 13: Ausnehmung
- 14: Freiraum
- 15: Bund
- 16: Griffbereich
- 17: Absatz
- 18: Ringkörper
- 19: Durchgang
- 20: Aussparung
- 21: Platte
- 22: Zwischenlage

## Patentansprüche

1. Hammer, insbesondere Vorschlaghammer, mit einem Hammerkopf (2) und einem Stiel (3), wobei der Hammerkopf (2) eine Bohrung und der Stiel (3) ein aus Metall gebildetes Stielrohr (4) aufweist, welches Stielrohr (4) eine Ummantelung (5) aus einem Dämpfungsmaterial trägt, **dadurch gekennzeichnet, dass** das Stielrohr (4) hammerkopfseitig eine Widerlagerplatte (6) trägt, die mit dem Stielrohr (4) verbunden ist und dass die Bohrung (7) unter Ausbildung eines umlaufenden Absatzes (17) in eine Ausnehmung (13) übergeht, wobei die Widerlagerplatte (6) im endmontierten Zustand unter Zwischenordnung einer Zwischenlage (22) aus einem Dämpfungsmaterial am umlaufenden Absatz (17) anliegt.

2. Hammer nach Anspruch 1, **dadurch gekennzeichnet, dass** das Stielrohr (4) vom Dämpfungsmaterial vollständig umgeben ist.

3. Hammer nach Anspruch 1 oder 2, **dadurch gekennzeichnet, dass** das Stielrohr (4) aus einem Vergütungsstahl gebildet ist.

4. Hammer nach einem der vorhergehenden Ansprüche, **dadurch gekennzeichnet, dass** die Ummantelung (5) und die Zwischenlage (22) einstückig aus einem Dämpfungsmaterial ausgebildet sind.

5. Hammer nach einem der vorhergehenden Ansprüche, **dadurch gekennzeichnet, dass** zwischen dem Stielrohr (4) und der Bohrung (7) ein Spaltraum (12) vorgesehen ist, der einen Ringkörper (18) aus einem Dämpfungsmaterial aufnimmt.

6. Hammer nach Anspruch 5, **dadurch gekennzeichnet, dass** der Hammerkopf (2) unter Zwischenordnung eines Dämpfers aus einem Dämpfungsmaterial am Stielrohr (4) angeordnet ist, wobei die Zwischenlage (22) und der Ringkörper (18) zusammen den Dämpfer ausbilden..

7. Hammer nach Anspruch 6, **dadurch gekennzeichnet, dass** der Dämpfer und die Ummantelung (5) einstückig ausgebildet sind.

8. Hammer nach einem der vorhergehenden Ansprüche, **dadurch gekennzeichnet, dass** das Dämpfungsmaterial ein Gummimaterial ist.

9. Hammer nach einem der vorhergehenden Ansprüche, **dadurch gekennzeichnet, dass** die Bohrung (7) über einen zylindrischen Mittelabschnitt (8) verfügt, der beiderseitig jeweils in einen sich ausgehend vom Mittelabschnitt (8) konisch erweiternden Randabschnitt (9, 10) übergeht.

10. Hammer nach einem der vorhergehenden Ansprüche 5 bis 8, **dadurch gekennzeichnet, dass** die Widerlagerplatte (6) einen Durchgang (19) aufweist.

11. Verfahren zur Herstellung eines Hammers nach einem der vorhergehenden Ansprüche 1 bis 10, bei dem ein in die Bohrung (7) eines Hammerkopfes (2) eingesetztes Stielrohr (4) aus Metall mit einem Dämpfungsmaterial vollständig umspritzt und gleichzeitig das Dämpfungsmaterial in einen Spaltraum (12) zwischen Stielrohr (4) und Bohrung (7) zur Ausbildung einer Zwischenlage (22) eingespritzt wird.

12. Verfahren nach Anspruch 11, **dadurch gekennzeichnet, dass** das in die Bohrung (7) eingesetzte Stielrohr (4) niedergehalten wird.

13. Verfahren nach Anspruch 12, **dadurch gekennzeichnet, dass** die Niederhaltung des Stielrohrs (4) zur Ausbildung eines Ringspalts (11) eingestellt wird.

14. Verfahren nach einem der vorhergehenden Ansprüche 11 oder 12, **dadurch gekennzeichnet, dass** ein am Hammerkopf (2) anliegender Bund (15) ausgebildet wird.

## Claims

1. A hammer, especially a sledge hammer, comprising a hammer head (2) and a helve (3), wherein the hammer head (2) comprises a bore and the helve (3) comprises a tube (4) made of metal, which helve tube (4) has a sheath (5) made of a damping material, **characterized in that** the helve tube (4) carries an abutment plate (6) on the side of the hammer head, which abutment plate is connected to the helve tube (4), and that the bore (7) merges into a recess (13) while forming a circumferential shoulder (17), wherein in the finally assembled state the abutment plate (6) sits close on the circumferential shoulder (17) with an interposed intermediate layer (22) made of a damping material.

2. A hammer according to claim 1, **characterized in that** the helve tube (4) is completely sheathed by damping material.

3. A hammer according to claim 1 or 2, **characterized in that** the helve tube (4) is made of tempering steel.

4. A hammer according to one of the preceding claims, **characterized in that** the sheath (5) and the intermediate layer (22) are one piece made of a damping material.

5. A hammer according to one of the preceding claims, **characterized in that** a gap space (12) is provided between the helve tube (4) and the bore (7), which gap space receives an annular body (18) made of a damping material.

6. A hammer according to claim 5, **characterized in that** the hammer head (2) is placed on the helve tube (4) with an interposed damper made of a damping material, wherein the intermediate layer (22) and the annular body (18) form together the damper.

7. A hammer according to claim 6, **characterized in that** the damper and the sheath (5) are one piece.

8. A hammer according to one of the preceding claims, **characterized in that** the damping material is a rubber material.

9. A hammer according to one of the preceding claims, **characterized in that** the bore (7) has a cylindrical centre section (8) which merges on both sides into a respective border portion (9, 10) which conically expands from the cylindrical centre section (8).

10. A hammer according to one of the preceding claims 5 through 8, **characterized in that** the abutment plate (6) comprises a passage (19).

11. A method for the manufacture of a hammer according to one of the preceding claims 1 through 10, in which a damping material is applied completely around a metal helve tube (4) which has been inserted into the bore (7) of a hammer head (2) and the damping material is simultaneously injected into a gap space (12) between helve tube (4) and bore (7) for forming an intermediate layer (22).

12. A method according to claim 11, **characterized in that** the helve tube (4) inserted into the bore (7) is held down.

13. A method according to claim 12, **characterized in that** the holding down of the helve tube (4) is set for forming an annular gap (11).

14. A method according to one of the preceding claims 11 or 12, **characterized in that** a collar (15) which sits close on the hammer head (2) is formed.

## Revendications

1. Marteau, notamment marteau vibreur, comprenant une tête de marteau (2) et une manche (3), la tête de marteau (2) comprenant un forage et la manche (3) comprenant un tube de manche (4) en métal, le tube de manche (4) portant une gaine (5) en un matériau d'amortissement, **caractérisé en ce que** le tube de manche (4) porte une plaque de butée (6) du côté de la tête de marteau, laquelle plaque de butée est reliée au tube de manche (4), et que le forage (7) passe à un creux (13) en formant un épaulement circonférentiel (17), la plaque de butée (6) étant collée à l'épaulement circonférentiel (17) dans l'état définitivement assemblé avec une couche intermédiaire (22) en un matériau d'amortissement interposée.

2. Marteau selon la revendication 1, **caractérisé en ce que** le tube de manche (4) est complètement enveloppé par le matériau d'amortissement.

3. Marteau selon la revendication 1 ou la revendication 2, **caractérisé en ce que** le tube de manche (4) est fabriqué en acier d'amélioration.

4. Marteau selon l'une des revendications précédentes, **caractérisé en ce que** la gaine (5) et la couche intermédiaire (22) sont solidaires en un matériau d'amortissement.

5. Marteau selon l'une des revendications précédentes, **caractérisé en ce qu'**un espace de fente (12) est prévu entre le tube de manche (4) et le forage (7), lequel espace de fente reçoit un corps annulaire (18) en un matériau d'amortissement.

6. Marteau selon la revendication 5, **caractérisé en ce que** la tête de marteau (2) est disposée sur le tube de manche (4) avec interposition d'un amortisseur en un matériau d'amortissement, la couche intermédiaire (22) et le corps annulaire (18) formant ensemble l'amortisseur.

7. Marteau selon la revendication 6, **caractérisé en ce que** l'amortisseur et la gaine (5) sont solidaires.

8. Marteau selon l'une des revendications précédentes, **caractérisé en ce que** le matériau d'amortissement est un matériau de caoutchouc.

9. Marteau selon l'une des revendications précédentes, **caractérisé en ce que** le forage (7) a une section centrale (8) qui passe des deux côtés à une partie de bord (9, 10) respective qui s'étend de manière conique à partir de la section centrale (8).

10. Marteau selon l'une des revendications précédentes 5 à 8, **caractérisé en ce que** la plaque de butée (6) comprend un passage (19).

11. Procédé de fabrication d'un marteau selon l'une des revendications précédentes 1 à 10, dans lequel un tube de manche (4) métallique inséré dans le forage (7) d'une tête de marteau (2) est complètement enveloppé d'un matériau d'amortissement et le matériau d'amortissement est simultanément injecté dans un espace de fente (12) entre le tube de manche (4) et le forage (7) pour former une couche intermédiaire (22).

12. Procédé selon la revendication 11, **caractérisé en ce que** le tube de manche (4) inséré dans le forage (7) est tenu en bas.

13. Procédé selon la revendication 12, **caractérisé en ce que** le maintien en bas du tube de manche (4) est ajusté pour former une fente annulaire (11).

14. Procédé selon l'une des revendications précédentes 11 ou 12, **caractérisé en ce qu'**un collet (15) est formé qui est collé à la tête de marteau (2).
